**Europäisches Patentamt**

**European Patent Office**

**Office européen des brevets**

(19)

(11) Veröffentlichungsnummer: **0 199 297 B1**

(12) **EUROPÄISCHE PATENTSCHRIFT**

(45) Veröffentlichungstag der Patentschrift: 25.09.91

(51) Int. Cl.⁵: **C04B 35/58**

(21) Anmeldenummer: **86105361.9**

(22) Anmeldetag: **17.04.86**

(54) **Verfahren zur Herstellung von Formkörpern aus reaktionsgebundenem Siliciumnitrid durch Nitridierung unter hohem Stickstoffgasdruck.**

(30) Priorität: 19.04.85 DE 3514284

(43) Veröffentlichungstag der Anmeldung:
29.10.86 Patentblatt 86/44

(45) Bekanntmachung des Hinweises auf die
Patenterteilung:
25.09.91 Patentblatt 91/39

(84) Benannte Vertragsstaaten:
AT BE CH DE FR GB IT LI NL SE

(56) Entgegenhaltungen:
CH-A- 654 564
GB-A- 2 010 915
US-A- 4 285 895

J.A. Kryl "Pri-vo i Primenienie Sverkhtverd
Materialov" Kiew 1983

T. Fuikawa et al., Int Symposium on Ceram.
Components for Engine, Okt 17-21,1983, Hakone, Japan

(73) Patentinhaber: **Elektroschmelzwerk Kempten GmbH**
**Herzog-Wilhelm-Strasse 16**
**W-8000 München 2(DE)**

(72) Erfinder: **Hunold, Klaus, Dr. Dipl.-Ing.**
**Hochgratweg 8**
**W-8962 Lauben(DE)**
Erfinder: **Lipp, Alfred, Dr. Dipl.-Chem.**
**Bürgermeister-Singer-Strasse 15**
**W-8939 Bad Wörishofen(DE)**
Erfinder: **Reinmuth, Klaus, Dr. Dipl.-chem.**
**An der Halde 21**
**W-8968 Durach(DE)**
Erfinder: **Arnold, Peter**
**Ahornstrasse 10**
**W-8961 Sulzberg(DE)**
Erfinder: **Napholcz, Johannes**
**Amselweg 63**
**W-8960 Kempten(DE)**

## Beschreibung

Die Herstellung von Formkörpern aus reaktionsgebundenem Siliciumnitrid durch Nitridierung vorgeformter Körper aus Siliciumpulver mit Stickstoff ist bekannt. Handelsübliche reaktionsgebundene Si₃N₄-Qualitäten (unter der Bezeichnung RBSN bekannt) haben im allgemeinen eine Dichte im Bereich von 75 - 85 % der theoretisch möglichen Dichte von $Si_3N_4$ (im folgenden als % TD abgekürzt), eine Porosität von 15 bis 30 % und enthalten freies Silicium. Die erreichbare Dichte ist dabei abhängig von der Dichte der vorgeformten Si-Körper und vom Nitridierungsgrad, d. h. dem Ausmaß der Umwandlung von Silicium in $Si_3N_4$, die im allgemeinen bei etwa 80 bis 95 % liegt.

Es ist ferner bekannt, daß durch Zugabe von Sinterhilfsmitteln zum Si-Ausgangspulver und durch eine im Anschluß an die Nitridierung durchgeführte Sinterung bei Temperaturen oberhalb von etwa 1600° C mit oder ohne Druckanwendung reaktionsgebundene $Si_3N_4$-Qualitäten mit Dichten von mehr als 95 % TD erhalten werden können. Dieses Verfahren hat gegenüber der direkten Sinterung von $Si_3N_4$-Pulver mit Zusatz von Sinterhilfsmitteln den Vorteil, daß während der Temperaturbehandlung der vorgeformten Körper durch die Nitridierung in Stickstoff enthaltender Atmosphäre keine und durch die Nachsinterung nur eine geringe Schwindung auftritt. Dadurch können gesinterte Formteile mit großer Maßgenauigkeit hergestellt werden, die üblicherweise nur durch mechanische Nachbearbeitung erreicht werden kann. Eine Nachbearbeitung von $Si_3N_4$ ist jedoch aufgrund der Härte des Materials sehr aufwendig und nur mit Diamantwerkzeugen möglich (vgl. DE-C2-28 55 785, DE-A-29 10 943, US-A-42 85 895 und J. A. Mangels in "Ceramic Bulletin", Vol. 60, Nr. 12 (1981), S. 1306-1310).

Die stark exotherm verlaufende Nitridierungsreaktion selbst wird üblicherweise, unabhängig davon, ob in der Ausgangsmischung Sinterhilfsmittel mitverwendet werden oder nicht, in mehreren Stufen durchgeführt. Hierbei werden bei Temperaturen unterhalb des Schmelzpunktes von Silicium (1410° C) eine oder mehrere Haltezeiten eingelegt, um ein vorzeitiges Aufschmelzen des Siliciums zu vermeiden. Die letzte Nitridierungsstufe kann sowohl unterhalb als auch oberhalb des Schmelzpunktes von Silicium durchgeführt werden. In allen Fällen führt jedoch dieses schrittweise Aufheizen dazu, daß die gesamte Nitridierzeit, insbesondere bei größeren Formteilen und größeren Einsatzmengen mehr als 100 Stunden beträgt.

Die Zumischung von Wasserstoff im Nitridiergas oder im Ausgangspulver vorhandenes Eisen beschleunigen die Nitridierungsreaktion, wodurch die Gesamtnitridierzeit etwas verkürzt werden kann. Der Einfluß dieser Maßnahmen und anderer Parameter, wie Reinheit und Feinheit des Ausgangspulvers auf die Bildung und die Eigenschaften von reaktionsgebundenem Siliciumnitrid werden in der Übersicht von A. J. Moulson in "Journal of Materials Science" 14 (1979), Seite 1017 - 1051 ausführlich erläutert.

Durch Verwendung einer Stickstoff enthaltenden Atmosphäre, der Wasserstoff und ein Inertgas zugemischt worden sind, und Steuerung der Temperatur über den Gasverbrauch bei der Nitridierung können die Eigenschaften von reaktionsgebundenem Siliciumnitrid verbessert werden. Um einen hohen Nitridierungsgrad zu erreichen, werden jedoch auch hier mehr als 100 Stunden benötigt (vgl. J. A. Mangels in "Ceramic Bulletin", Vol. 60, Nr. 6 (1981), Seite 613 - 617).

Durch Verwendung von besonders feinen und reinen Siliciumausgangspulvern, gegebenenfalls im Gemisch mit Siliciumnitridpulvern und Vorverdichtung des vorgeformten Siliciumkörpers durch Sintern bei Temperaturen unterhalb des Schmelzpunktes von Silicium soll ebenfalls die Zeit für die Nitridierung verkürzt werden können (vgl. GB-PS-15 46 928). Hier wurde bereits darauf hingewiesen, daß die Zeit bis zum Erreichen eines Nitridierungsgrades von etwa 80 % durch Anwendung von Stickstoffüberdruck bis zu etwa 50 Atmosphären (ungefähr 5 MPa) auf weniger als einen Tag verkürzt werden könnte. Wie aus den Beispielen ersichtlich wurden jedoch die besten Ergebnisse bei Atmosphärendruck in strömendem Stickstoff und Fortsetzung der Nitridierung bis zu 100 Stunden erreicht.

Die Abläufe der Reaktionssinterung von Siliciumnitrid bei einem Stickstoffdruck von maximal 100 MPa und einer Temperatur von maximal 2000° C wurden in einer Arbeit von J. A. Kryl in "Pri-vo i Primenenie Sverkhtverd, Materialov", Kiew 1983, S. 15 - 20 (ref. C. A. Vol. 100: 179168 w) untersucht. Dabei wurde festgestellt, daß bei einer Aufheizgeschwindigkeit von weniger als 20° pro Minute, einem Stickstoffdruck von 10 MPa und einer isothermischen Haltezeit von 4 Stunden ein Nitridierungsgrad von 85,6 % erreicht wurde. Bei einem Stickstoffdruck von 100 MPa konnten Musterteile von einer Dichte von 80 bis 85 % TD gefertigt werden.

Desgleichen wurde von T. Fujikawa et al im "International Symposium on Ceramic Components for Engine", Okt. 17 - 21, 1983, Hakone, Japan, von vorläufigen Versuchen berichtet, nach welchen unter Anwendung eines Stickstoffdruckes von etwa 500 Kgf/cm² (ungefähr 50 MPa) aus Siliciumpulver beziehungsweise aus Siliciumpulver im Gemisch mit $Si_3N_4$-Pulver (50 : 50) reaktionsgesinterte $Si_3N_4$-Formkörper mit einer Dichte von maximal 84 % TD erhalten werden konnten.

Obwohl demnach bereits bekannt ist, daß bei Verfahren zur Herstellung von Formkörpern aus reaktionsgebundenem Siliciumnitrid durch Nitridierung von vorgeformten Körpern aus Siliciumpulver in mehreren Stufen und Anwendung von Stickstoff unter erhöhtem Druck die Nitridierung beschleunigt werden kann, blieb bisher die Aufgabe ungelöst, wie im einzelnen verfahren werden muß, um nicht nur eine beträchtliche Verkürzung der Gesamtnitridierungszeit auf weniger als 15 Stunden, sondern auch eine Steigerung der Umwandlung von Silicium auf mindestens 95 % zu erreichen.

Diese Aufgabe wird erfindungsgemäß dadurch gelöst, daß ein Stickstoffgasdruck von mindestens 6 MPa angewendet wird, unter welchem die vorgeformten Körper nach einer Haltezeit von mindestens 0,5 Stunden bei einer Temperatur von etwa 50° C bis 100° C unterhalb der Reaktionstemperatur in einer ersten Nitridierungsstufe mit einer Aufheizgeschwindigkeit von nicht mehr als 50° C pro Stunde auf diese Reaktionstemperatur unterhalb des Schmelzpunktes von Silicium erhitzt, bei dieser Reaktionstemperatur mindestens 0,5 Stunden gehalten und anschließend in einer zweiten Stufe Mit einer Aufheizgeschwindigkeit von mindestens 500° C pro Stunde auf die Endtemperatur oberhalb des Schmelzpunktes von Silicium erhitzt und bei dieser Endtemperatur 1 bis 7 Stunden gehalten werden.

Mit Hilfe des erfindungsgemäßen Verfahrens können vorgeformte Körper beliebiger Form und Größe nitridiert werden. Als Ausgangsmaterial für die vorgeformten Körper werden vorteilhaft Siliciumpulver mit mittleren Teilchengrößen im Bereich von 5 bis 15 μm verwendet. Die Reinheit der Si-Pulver spielt hierbei keine entscheidende Rolle, d. h. es können sowohl hochreine Si-Pulver mit einem $Si_{frei}$-Gehalt von > 99,5 % als auch weniger reine Si-Pulver mit einem $Si_{frei}$-Gehalt von etwa 98 % verwendet werden.

Bei Einsatz von sehr feinen Si-Pulvern, worunter Pulverteilchengrößen von < 4 μm zu verstehen sind, wird die reagierende Oberfläche der vorgeformten Körper sehr groß. Durch Zusatz von bis zu 15 Gew.-% $Si_3N_4$-Pulvern zu diesen Ausgangs-Si-Pulvern kann die Reaktion gedämpft werden.

Die vorgeformten Körper können auch unter Mitverwendung von Sinterhilfsmitteln hergestellt werden. Hierunter sind bekannte Sinterhilfsmittel, ausgewählt aus der Gruppe der Oxide, wie Magnesiumoxid, Yttriumoxid, Aluminiumoxid, Eisenoxid und Berylliumoxid zu verstehen, die die Verdichtung von Siliciumnitrid unterstützen. Diese Sinterhilfsmittel werden einzeln oder im Gemisch, vorzugsweise in Mengen bis zu etwa 10 Gew.-% mit dem Ausgangspulver homogen vermischt.

Die Formgebung der Ausgangspulver, bzw. Pulvergemische kann durch übliche bekannte Maßnahmen, beispielsweise durch Gesenkpressen, isostatisches Pressen, Spritzgießen, Stranggießen oder Schlickergießen bei Raumtemperatur oder erhöhter Temperatur vorgenommen werden. Nach der Formgebung sollten die Grünkörper eine theoretische Dichte von mindestens 50 %, vorzugsweise mindestens 60 % TD aufweisen. Anschließend werden die Grünkörper vorteilhaft einer thermischen Behandlung unterzogen, um Zersetzungsprodukte aus den Bindemitteln zu entfernen.

Für die Durchführung des erfindungsgemäßen Verfahrens werden die vorgeformten Körper vorteilhaft in Graphitbehältern mit einer inerten Pulverschüttung so untergebracht, daß ein ungehinderter Zutritt des Reaktionsgases möglich ist. Als Pulverschüttung, die sich gegenüber Si und $Si_3N_4$ inert verhalten muß, kann beispielsweise $Si_3N_4$-Pulver verwendet werden.

Die Graphitbehälter samt Inhalt werden in den Ofenraum eines Autoklaven eingebracht. Während der Aufheizphase bis zu etwa 400° C wird der Autoklav abwechselnd evakuiert und mit Stickstoff gespült, um vorhandene Fremdgase zu entfernen. Anschließend wird der gewählte Stickstoffgasdruck von > 6 MPa aufgebracht und die Temperatur weiter erhöht.

Die Reaktionstemperatur für die erste Nitridierungsstufe unterhalb des Schmelzpunktes von Silicium wird durch den Reaktionsbeginn von Stickstoff mit Silicium festgelegt. Sie ist abhängig von der Feinheit und Reinheit des Siliciumausgangspulvers und kann durch thermogravimetrische Vorversuche für jedes verwendete Si-Pulver leicht ermittelt werden. Es ist vorteilhaft, etwa 50° bis 100° C unterhalb dieser Reaktionstemperatur eine Haltezeit von etwa 0,5 bis 3 Stunden im Nitridierungsprozess einzuschalten. Anschließend wird die Temperatur mit der Aufheizgeschwindigkeit von definitionsgemäß nicht mehr als 50° C pro Stunde auf die ermittelte Reaktionstemperatur erhöht und bei dieser Temperatur 0,5 bis 3 Stunden gehalten. Die jeweilige Haltezeit richtet sich vor allem nach der Masse des eingesetzten Siliciums, denn je größer die Siliciummasse ist, die nitridiert werden soll, um so größer ist die bei der Reaktionstemperatur frei werdende Wärmemenge. Dann wird die Temperatur mit der Aufheizgeschwindigkeit von definitionsgemäß mindestens 500° C pro Stunde auf die Endtemperatur oberhalb des Schmelzpunktes von Silicium erhöht, die vorteilhaft im Bereich von 1600° bis 1800° C liegt. Diese Endtemperatur wird so lange aufrechterhalten, bis mindestens 95 %, vorzugsweise mindestens 98 % des ursprünglich vorhandenen Siliciums in $Si_3N_4$ umgewandelt worden sind. Die Haltezeit, die definitonsgemäß im Bereich von 1 bis 7 Stunden liegt, ist abhängig von der gewählten Endtemperatur und der Teilchengröße des Siliciumausgangspulvers. Nach beendeter Haltezeit bei der Endtemperatur wird die Autoklavenheizung abgeschaltet, die Anlage unter Druck abgekühlt und bei Raumtemperatur dekomprimiert.

Unter Einhaltung dieser Bedingungen werden aus vorgeformten Körpern, die aus Siliciumpulver und gegebenenfalls bis zu 15 Gew.-% Siliciumnitridpulver bestehen, in einer Gesamtnitridierzeit von weniger als 15 Stunden (ohne die Abkühlungsphase) poröse Formkörper aus reaktionsgebundenem Siliciumnitrid von beliebiger Form und Größe und einer Dichte im Bereich von etwa 87 bis 91 % TD erhalten, in welchen das Siliciumnitrid im wesentlichen in der $\beta$-Modifikation vorliegt.

Die Gesamtnitridierzeit wird auch bei Einsatz von sehr reinem Si-Pulver nur geringfügig verlängert, im Gegensatz zu den herkömmlichen Nitridierungsverfahren, die unter Atmosphärendruck arbeiten.

Durch gezielte Auswahl der Haltezeit bei der ermittelten Reaktionstemperatur und der Aufheizgeschwindigkeit in der zweiten Stufe ist es ferner möglich die Dichteverteilung in den Formkörpern bewußt zu steuern. So können beispielsweise Formkörper aus reaktionsgebundenem Siliciumnitrid mit Wandstärken von größer 3 mm, die eine dichte äußere Schicht mit hoher Verschleißfestigkeit aufweisen, dadurch erhalten werden, daß die Haltezeit bei der Reaktionstemperatur weniger als 1 Stunde und die Aufheizgeschwindigkeit auf die Endtemperatur mindestens 800 °C pro Stunde beträgt, wobei gleichzeitig der Stickstoffdruck erhöht werden kann. Hierdurch wird auf den Formkörpern eine 100 bis 400 $\mu$m dicke, nahezu 100 %-ig dichte Oberflächenschicht aus $Si_3N_4$ gebildet, die etwas höhere Anteile an freiem Silicium aufweist als das Restmaterial. Diese Schicht setzt einem abrasivem Verschleiß der Formkörper einen erhöhten Widerstand entgegen.

Bei Einsatz von sehr feinen Si-Pulvern kann durch Zusatz von bis zu 15 Gew.-% $Si_3N_4$-Pulver die anfänglich sehr heftige Reaktion mit Stickstoff so weit abgemildert werden, daß auch bei dickwandigen Teilen ( > 5 mm) die Reaktionswärme ausreichend rasch abgeführt und so ein partielles Schmelzen des Siliciums verhindert wird. Die Gesamtnitridierzeit wird dadurch ebenfalls nur unwesentlich verlängert.

Größere Zusätze von $Si_3N_4$-Pulver bringen indessen keinen Vorteil in bezug auf die Gesamtnitridierzeit, sondern behindern die ausreichende Verdichtung. So können mit mehr als 20 Gew.-% Siliciumnitridpulver nur mehr Dichten von bis zu 85 % TD erreicht werden.

Bei der Mitverwendung von Sinterhilfsmitteln aus der Gruppe der Oxide wird die Nitridierung vorteilhaft in einem Hochdruckautoklaven (heißisostatische Presse) durchgeführt. Hierbei findet in der zweiten Nitridierungsstufe bei einer Temperatur von mindestens 1700 °C eine zusätzliche Verdichtung durch Sintern statt. Bei Erreichen der Sinterdichte von mindestens 95 % TD liegt im reaktionsgebundenen Sinterkörper keine offene Porosität mehr vor, so daß durch den vorhandenen Stickstoffgasdruck eine zusätzliche heißisostatische Verdichtung erfolgt. Diese kann durch Erhöhung des Stickstoffgasdruckes auf mindestens 150 MPa unterstützt werden.

Vorgeformte Körper, die aus Siliciumpulver und bis zu 10 Gew.-% Sinterhilfsmitteln bestehen, können somit in einem Arbeitsgang im Hochdruckautoklaven nitridiert, gesintert und heißisostatisch nachverdichtet werden, so daß als Endprodukte reaktionsgebundene Siliciumnitridsinterkörper mit mehr als 98 % TD erhalten werden.

In den folgenden Beispielen wird das erfindungsgemäße Verfahren näher erläutert:

Eingesetzt wurden zwei Siliciumpulverqualitäten und ein Siliciumnitridpulver. Im folgenden sind die Analysen dieser Ausgangspulver in Gew.-% aufgeführt:

|  | Si I | Si II | $Si_3N_4$ |
|---|---|---|---|
| $Si_{frei}$ | 99,55 | 98,60 | 0,09 |
| $Si_3N_4$ | - | - | 98,10 |
| $O_2$ | 0,30 | 0,40 | 1,20 |
| Al | 0,05 | 0,15 | 0,15 |
| Ca | 0,04 | 0,06 | 0,02 |
| Fe | 0,02 | 0,50 | 0,05 |
| C | 0,01 | 0,20 | 0,30 |
| Rest | 0,03 | 0,09 | 0,09 |

Beispiel 1:

Das Siliciumpulver Si II (mittlere Teilchengröße 13 μm) wurde mit Kampfer als Preßhilfsmittel bei 400 MPa kaltisostatisch zu Tiegeln von 100 mm d und 100 mm Höhe mit einer Wandstärke von 3 mm verpreßt. Nach Austreiben des Kampfers in einem Trockenschrank bei ca. 120° C wurde der Tiegel auf eine Schüttung aus $Si_3N_4$-Pulver gestellt und in einer Graphitschatulle in eine Heißisostatpresse gegeben. Bis zu einer Temperatur von 400° C wurde langsam aufgeheizt, wobei mehrfach der Arbeitsraum des Autoklaven evakuiert und wieder mit Stickstoff gefüllt wurde. Anschließend wurde ein Stickstoffdruck von 20 MPa aufgegeben und der Ofen auf 1240° C aufgeheizt. Nach einer Stunde Haltezeit wurde mit 50° C pro Stunde auf die ermittelte Reaktionstemperatur von 1310° C erhitzt und diese ebenfalls 1 Stunde gehalten. Danach wurde mit 600° C pro Stunde bis zur Endtemperatur von 1650° C aufgeheizt, wobei sich der Stickstoffdruck auf 35 MPa erhöhte. Die Endtemperatur wurde 3 Stunden gehalten und anschließend kühlte die Anlage unter Druck ab. Die Gesamtzykluszeit, ohne die Abkühlung, betrug ca. 10 Stunden. 98,3 % des Siliciums hatten sich zu Siliciumnitrid umgesetzt. Die Dichte wurde mit 2,78 g/cm³ (ca. 87 % TD) gemessen.

Beispiel 2:

Das Siliciumpulver Si II (mittlere Teilchengröße 13 μm) wurde mit 5 Gew.-% $Si_3N_4$-Pulver und Kampfer bei 400 MPa kaltisostatisch zu einer Platte (20 mm x 20 mm x 8 mm) verpreßt. Das Trocknen und das Aufheizen bis zur Reaktionstemperatur unter 20 MPa Stickstoffdruck wurden wie in Beispiel 1 durchgeführt. Nach einer Haltezeit von 40 Minuten bei der Reaktionstemperatur von 1310° C wurde mit einer Aufheizgeschwindigkeit von 1000° C pro Stunde bis zur Endtemperatur von 1700° C aufgeheizt, wobei gleichzeitig der Stickstoffdruck auf 80 MPa gesteigert wurde. Die Endtemperatur wurde 4 Stunden gehalten und anschließend kühlte die Anlage unter Druck ab. Dei Gesamtzykluszeit, ohne Abkühlung, betrug ca. 11 Stunden. 96,9 % des Siliciums hatten sich zu Siliciumnitrid umgesetzt. Die Dichte wurde mit 2,79 g/cm³ (ca. 87,5 % TD) gemessen. Die dichte Oberflächenschicht hatte eine Dicke von ca. 200 μm.

Beispiel 3

Das hochreine Siliciumpulver Si I (mittlere Teilchengröße 8 μm) wurde mit Kampferzusatz bei 400 MPa kaltisostatisch zu Platten (50 mm x 50 mm x 4 mm) verpreßt. Das Trocknen und Nitridieren wurde wie in Beispiel 1 durchgeführt, wobei die Haltezeit bei Endtemperatur auf 4 Stunden verlängert wurde. Die Zykluszeit betrug ca. 11 Stunden. 98,6 % des Siliciums hatten sich zu Siliciumnitrid umgesetzt. Die Dichte wurde mit 2,81 g/cm³ (ca. 88 % TD) gemessen.

Beispiel 4

Das Siliciumpulver Si II wurde in einer Rührwerkskugelmühle auf eine mittlere Teilchengröße von 4 μm gemahlen. Der Eisengehalt stieg hierdurch auf 0,9 Gew.-% an. Das Siliciumpulver wurde in einem Taumelmischer mit 10 Gew.-% Siliciumnitridpulver (mittlere Teilchengröße 0,5 μm) und Kampfer gemischt und zu einer Platte von 50 mm x 50 mm x 10 mm bei 400 MPa kaltisostatisch verpreßt. Der Kampfer wurde bei 120°C ausgetrieben. In einer Graphitschatulle wurde die Platte auf einer Pulverschüttung aus $Si_3N_4$ in eine Heißisostatpresse gegeben. Der Nitridierzyklus wurde in Anlehnung an Beispiel 1 durchgeführt, allerdings wurde bei 400°C ein Stickstoffdruck von 50 MPa aufgegeben und eine erste Haltezeit bei 1200°C von 2 Stunden und eine zweite Haltezeit bei 1280°C von 1 Stunde eingelegt. Bis zur Endtemperatur von 1750°C wurde der Stickstoffdruck auf 100 MPa gesteigert. Die Haltezeit bei Endtemperatur betrug 3 Stunden, was eine Zykluszeit von ca. 11 Stunden ergab. Der Siliciumnitridgehalt des Körpers wurde zu 99,2 Gew.-% bestimmt und die Dichte mit 2,91 $g/cm^3$ (ca. 91 % TD) gemessen.

Beispiel 5

Das gemahlene Siliciumpulver Si II (entsprechend Beispiel 4) wurde nur mit Kampfer versetzt und bei 400 MPa kaltisostatisch zu einem Zylinder von 15 mm d und 50 mm Höhe verpreßt. Der Kampfer wurde bei 120°C ausgetrieben. In einer Graphitschatulle wurde der Zylinder auf einer Pulverschüttung aus Siliciumnitrid in eine Heißisostatpresse gegeben und unter abwechselnder Evakuierung und Stickstoffspülung bis 400°C aufgeheizt. Anschließend wurde ein Stickstoffdruck von 6 MPa aufgebracht und mit einer Aufheizgeschwindigkeit von 500°C pro Stunde bis auf 1200°C erhitzt. Diese Temperatur wurde 2 Stunden gehalten und danach mit 50°C pro Stunde auf 1280°C aufgeheizt. Nach einer weiteren Haltezeit von 2 Stunden wurde mit einer Aufheizgeschwindigkeit von 700°C pro Stunde bis auf die Endtemperatur von 1750°C erhitzt, die drei Stunden gehalten wurde. Die Zykluszeit betrug ca. 12 Stunden. 98,7 % des Siliciums waren zu Siliciumnitrid umgesetzt. Die Dichte wurde mit 2,86 $g/cm^3$ (ca. 89 % TD) gemessen.

Beispiel 6

Das Siliciumpulver Si I wurde in einer Rührwerkskugelmühle auf eine mittlere Teilchengröße von 0,8 μm gemahlen. Der Eisengehalt stieg auf 0,6 Gew.-% an. Das Siliciumpulver wurde mit 8 Gew.-% Yttriumoxidpulver und 1 Gew.-% Aluminiumoxidpulver und Kampfer in einem Taumelmischer homogen vermischt und bei 400 MPa kaltisostatisch zu Platten (50 mm x 50 mm x 10 mm) verpreßt. Nach dem Austreiben des Kampfers bei 120°C im Trockenschrank wurden die Platten auf eine Pulverschüttung aus Siliciumnitrid gestellt und in einer Graphitschatulle in die Heißisostatpresse gegeben. Nach dem Evakuieren und Stickstoffspülen bis 400°C wurde ein Stickstoffdruck von 50 MPa aufgegeben und die Temperatur mit 500°C pro Stunde auf eine Zwischentemperatur von 1170°C erhöht. Diese Temperatur wurde 3 Stunden gehalten, anschließend wurde die Temperatur mit 50°C pro Stunde auf 1270°C erhöht, erneut 2 Stunden gehalten und danach mit 700°C pro Stunde auf 1800°C Endtemperatur aufgeheizt. Der bei Erreichen der Endtemperatur herrschende Stickstoffdruck von 80 MPa wurde nach 1 Stunde Haltezeit innerhalb einer weiteren Stunde auf 150 MPa erhöht und bei diesem Druck wurde eine zusätzliche Haltezeit von 1,5 Stunden eingelegt. Der Zyklus dauerte ca. 14 Stunden. Das Silicium hatte sich zu 99,1 % zu Siliciumnitrid umgesetzt. Die Dichte wurde mit 3,24 $g/cm^3$ (ca. 98 % TD) gemessen.

In allen Beispielen lag das Siliciumnitrid nach dem Nitridieren nahezu 100 %ig in der β-Modifikation vor.

Den Beispielen vergleichbare Zyklen würden bei der Nitridierung mit Stickstoff oder Stickstoff/Wasserstoff-Gemischen unter Normaldruck 100 - 140 Stunden dauern.

**Patentansprüche**

1. Verfahren zur Herstellung von Formkörpern aus reaktionsgebundenem Siliciumnitrid durch Nitridierung von vorgeformten Körpern auf Basis von Si-Pulver in mehreren Stufen und Anwendung von Stickstoff unter erhöhtem Druck, dadurch gekennzeichnet, daß ein Stickstoffgasdruck von mindestens 6 MPa angewendet wird, unter welchem die vorgeformten Körper nach einer Haltezeit von mindestens 0,5 Stunden bei einer Temperatur von etwa 50°C bis 100°C unterhalb der Reaktionstemperatur in einer ersten Nitridierungsstufe mit einer Aufheizgeschwindigkeit von nicht mehr als 50°C pro Stunde auf diese Reaktionstemperatur unterhalb des Schmelzpunktes von Silicium erhitzt, bei dieser Reaktionstemperatur mindestens 0,5 Stunden gehalten und anschließend in einer zweiten Stufe mit einer Aufheizgeschwindigkeit von mindestens 500°C pro Stunde auf die Endtemperatur oberhalb des Schmelzpunktes von Silicium erhitzt und bei dieser Endtemperatur 1 bis 7 Stunden gehalten werden.

2. Verfahren gemäß Anspruch 1 zur Herstellung von porösen Formkörpern mit einer Dichte von 87 bis 91 % TD, dadurch gekennzeichnet, daß vorgeformte Körper, die aus Si-Pulver allein oder aus Si-Pulver und bis zu 15 Gew.-% Siliciumnitridpulver bestehen, nitridiert werden.

3. Verfahren gemäß Anspruch 1 zur Herstellung von dichten Formkörpern mit einer Dichte von mindestens 98 % TD, dadurch gekennzeichnet, daß vorgeformte Körper, die aus Si-Pulver und bis zu 10 Gew.-% Sinterhilfsmitteln, ausgewählt aus der Gruppe MgO, $Y_2O_3$, $Al_2O_3$, $Fe_2O_3$ und BeO, einzeln oder im Gemisch, bestehen, nitridiert werden.

4. Verfahren gemäß Anspruch 3, dadurch gekennzeichnet, daß die Nitridierung im Hochdruckautoklaven durchgeführt und in der zweiten Stufe nach Erreichen einer Temperatur von mindestens 1700° C der Stickstoffgasdruck auf mindestens 150 MPa erhöht wird.

**Claims**

1. Process for the manufacture of shaped articles of reaction-bonded silicon nitride by nitridation of pre-shaped articles based on Si powder in several stages and using nitrogen under elevated pressure, characterised in that a nitrogen gas pressure of at least 6 MPa is applied, under which the pre-shaped articles are, after a dwell time of at least 0.5 hours at a temperature of about 50° C to 60° C below the reaction temperature, in a first nitridation stage heated at a heating rate of not more than 50° C per hour to this reaction temperature below the melting point of silicon, maintained at that temperature for a least 0.5 hours and subsequently, in a second stage, heated at a heating rate of at least 500° C per hour to the final temperature above the melting point of silicon and maintained at this final temperature for from 1 to 7 hours.

2. Process according to claim 1 for the manufacture of porous shaped articles having a density of from 87 to 91 % TD, characterised in that pre-shaped articles consisting of Si powder alone or of Si powder and up to 15 % by weight silicon nitride powder are nitridated.

3. Process according to claim 1 for the manufacture of dense shaped articles having of density of more than 98 % TD, characterised in that pre-shaped articles consisting of Si powder and up to 10% by weight sintering auxiliaries selected from the group MgO, $Y_2O_3$, $Al_2O_3$, $Fe_2O_3$ and BeO, individually or in admixture with one another, are nitridated.

4. Process according to claim 3, characterised in that the nitridation is carried out in a high-pressure autoclave and, in the second stage, after reaching a temperature of at least 1700° C, the nitrogen gas pressure is increased to at least 150 MPa.

**Revendications**

1. Procédé de fabrication d'objets moulés en nitrure de silicium lié par réaction par nitruration de corps prémoulés à base d'une poudre de silicium en plusieurs étapes et à haute pression d'azote, procédé caractérisé en ce que l'on opère à une pression d'azote d'au moins 6 MPa à laquelle les corps prémoulés, après un temps de maintien d'au moins une demi-heure à une température inférieure d'environ 50 à 100° C à la température de réaction, sont chauffés à cette température de réaction dans une première étape de nitruration à une vitesse de chauffage ne dépassant pas 50° C à l'heure, au-dessous du point de fusion du silicium, on les maintient pendant au moins une demi-heure à cette-température de réaction puis dans une seconde étape on les porte à la température finale, au-dessus du point de fusion du silicium, à une vitesse de chauffage d'au moins 500° C à l'heure, et on les maintient à cette température finale pendant une durée de 1 à 7 heures.

2. Procédé selon la revendication 1 pour la fabrication d'objets moulés poreux ayant une densité de 87 à 91% de la densité théorique, procédé caractérisé en ce que l'on nitrure des corps prémoulés formés seulement de la poudre de silicium ou bien de cette poudre avec jusqu'à 15% en poids d'une poudre de nitrure de silicium.

3. Procédé selon la revendication 1 pour la fabrication d'objets moulés denses, ayant une densité d'au moins 98% de la densité théorique, procédé caractérisé en ce que l'on nitrure des corps prémoulés formés de la poudre de silicium avec jusqu'a 10% en poids d'adjuvants de frittage pris parmi les oxydes MgO, $Y_2O_3$, $Al_2O_3$, $Fe_2O_3$ et BeO, employés séparément ou à plusieurs d'entre eux à la fois.

4. Procédé selon la revendication 3, caractérisé en ce que l'on effectue la nitruration dans un autoclave à haute pression et dans la seconde étape, après avoir atteint une température d'au moins 1700°C, on élève la pression d'azote à 150 MPa au moins.